# EUROPEAN PATENT APPLICATION

(11) **EP 4 109 184 A1**
(43) Date of publication of application: **28.12.2022**
(21) Application number: 20920068.2
(22) Date of filing: 03.12.2020
(51) Int. Cl.: G05B 9/02, G05B 9/03, G06F 11/18

(54) **CONTROL DEVICE**

(30) Priority: 20.02.2020 JP 2020027625
(71) Applicant: Hitachi, Ltd., Tokyo 100-8280 (JP)
(72) Inventor: SHIMAMURA, Kotaro, Tokyo 100-8280 (JP); IKEDA, Naohiro, Tokyo 100-8280 (JP)
(74) Representative: Mewburn Ellis LLP
(86) International application number: PCT/JP2020/045004
(87) International publication number: WO 2021/166373

(57) **Abstract**

Included are: a storage unit that is capable of latching data having different acquisition timings; and an input control circuit that controls, for each of a plurality of processing devices, whether or not to input input data, which is transmitted from a control target apparatus, to the processing device in response to an input request from the processing device to the control target apparatus. An information difference caused by an acquisition timing difference is eliminated to be made into input data by latching the data in the storage unit. Identity determination on each piece of output data or majority decision is adopted as a determination criterion. In the identity determination, it is determined that there is a malfunction in a case where there is a non-identical combination between the output data. The majority decision is applied to a case where the output data has three or more systems, and whether there is a malfunction is determined based on a result of the majority decision.

## Description

### Technical Field

The present invention relates to a control device.

### Background Art

As a background art of the present technical field, for example, there is PTL 1. This publication describes a control device that executes the same processing by a plurality of processing devices, detects a malfunction by collating processing results, and stops an output. In a control system of FIG. 1 disclosed in PTL 1, a control terminal is provided between a control target apparatus and two processing devices.

The control terminal has a function of correctly acquiring communication data without altering the content of information even when there is a discrepancy between a timing at which a first processing device acquires information from the control target and a timing at which a second processing device acquires information from the control target. In PTL 1, a method of receiving communication data via the control terminal is described as a means for two processing devices to correctly grasp a state of the control target apparatus.

### Citation List

### Patent Literature

PTL 1: Japanese Patent No. 6017344

### Summary of Invention

### Technical Problem

In this case, the control terminal provided between the apparatus and two processing devices is indispensable, and thus the quantity of the entire system increases by the quantity of that control terminal. Even when the quantity of the control terminal is only about that of a well-known personal computer (PC), it may be desired to avoid the control terminal in some application of the control system. In this regard, in the control system, in a case where the control terminal is not provided in order to avoid an increase in the quantity, it is also conceivable that a plurality of processing devices directly and actively fetches the state of the apparatus.

However, there is a case where a discrepancy in fetching timing occurs among the plurality of processing devices. As described above, when the fetching timings are different from each other, in a case where the CPUs of the processing devices are not synchronized, there is a possibility that a mismatch occurs between the fetched values. "Not synchronized" described herein includes an error in PPM level at the clock frequency of the central processing unit (CPU) included in each processing device.

When there is a mismatch between the fetched values, a mismatch also occurs in the processing result obtained by using those values, which is detected as a malfunction. As a result, in the control device which has redundancy by multiplexing in which the same processing is executed by the plurality of processing devices, there is a possibility that an output stops even though the control device and the control target apparatus are in a normal operation range.

The present invention has been made in view of such a problem, and an object of the present invention is to provide a control device which has redundancy by multiplexing in which the same processing is executed by a plurality of processing devices, the control device preventing excessive malfunction detection caused by a discrepancy between timings at which the plurality of processing devices fetches an input.

### Solution to Problem

A control device of the present invention that solves the above problem is a control device that determines, based on a predetermined determination criterion, a plurality of pieces of output data output for same processing respectively from a plurality of processing devices that executes processing based on input data input from a control target apparatus and outputs output data, and stops outputting the output data when a result of the determination is a malfunction, the control device including:
a storage unit that latches first input data that is transmitted from the control target apparatus in response to a first input request transmitted from any processing device of the plurality of processing devices to the control target apparatus; and
an input control circuit that controls, for each of the plurality of processing devices, whether or not to input input data transmitted from the control target apparatus to the processing device in response to an input request from the processing device to the control target apparatus, wherein
the input control circuit
   (1) inputs the first input data to a processing device that executes predetermined processing based on the first input data to output the output data and has output the first input request,
   (2) determines whether or not a second input request, which is transmitted from a processing device different from the processing device that has output the first input request among the plurality of processing devices, is same as the first input request, and
   (3) inputs, when a result of the determination is true, the first input data stored in the storage unit to the processing device that has output the second input request.

### Advantageous Effects of Invention

According to the present invention, even when the plurality of processing devices is not completely synchronized so that the transmission timings of the same input request are different, and as a result, the input data transmitted from the control target apparatus is different with respect to the plurality of same input requests, the same input data can be input to the plurality of processing devices. Therefore, the same output data is obtained from the plurality of processing devices that has transmitted the same input request. Therefore, even when different input data is received from the control target apparatus in response to the same input request, the same output data can be obtained from the plurality of processing devices.

As a result, in the control device which has redundancy by multiplexing in which the same processing is executed by the plurality of processing devices, the control device can be provided which prevents excessive malfunction detection caused by a discrepancy between timings at which the plurality of processing devices fetches an input. Problems, configurations, and effects other than those described above will be clarified by the following description of embodiments.

### Brief Description of Drawings

[FIG. 1] FIG. 1 is a block diagram common to a control device according to first to fourth embodiments of the present invention.
[FIG. 2] FIG. 2 is a block diagram illustrating a first example of an input control circuit in the control device of FIG. 1, and illustrates a feature of a first embodiment.
[FIG. 3] FIG. 3 is a table for explaining operations of a comparison circuit and a storage circuit of FIG. 2.
[FIG. 4] FIG. 4 is a block diagram illustrating a second example of the input control circuit in the control device 1 of FIG. 1, and illustrates a feature of a second embodiment.
[FIG. 5] FIG. 5 is a block diagram illustrating a third example of the input control circuit in the control device 1 of FIG. 1, and illustrates a feature of a third embodiment.
[FIG. 6] FIG. 6 is a table for explaining an operation of the comparison circuit of FIG. 5.
[FIG. 7] FIG. 7 is a block diagram illustrating a fourth example of the input control circuit in the control device of FIG. 1, and illustrates a feature of a fourth embodiment.
[FIG. 8] FIG. 8 is a table for explaining an operation according to a first example of the comparison circuit of FIG. 7.
[FIG. 9] FIG. 9 is a table for explaining an operation according to a second example of the comparison circuit of FIG. 7.
[FIG. 10] FIG. 10 is a block diagram illustrating a control device according to a fifth embodiment of the present invention.
[FIG. 11] FIG. 11 is a block diagram illustrating an example of a majority decision circuit in the control device of FIG. 10.
[FIG. 12] FIG. 12 is a block diagram illustrating an example of an input control circuit in the control device of FIG. 10.
[FIG. 13] FIG. 13 is a table for explaining operations of a comparison circuit and a storage circuit of FIG. 12.

### Description of Embodiments

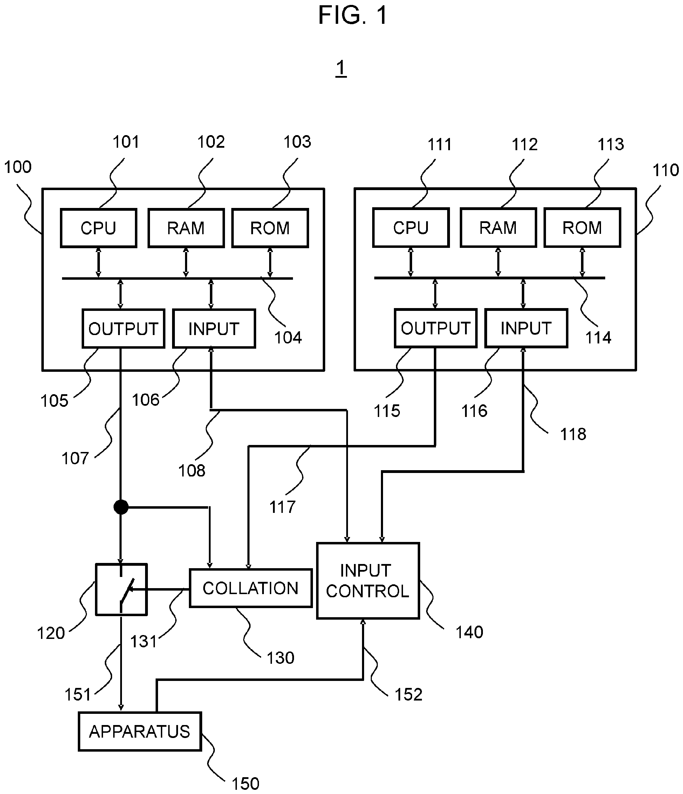

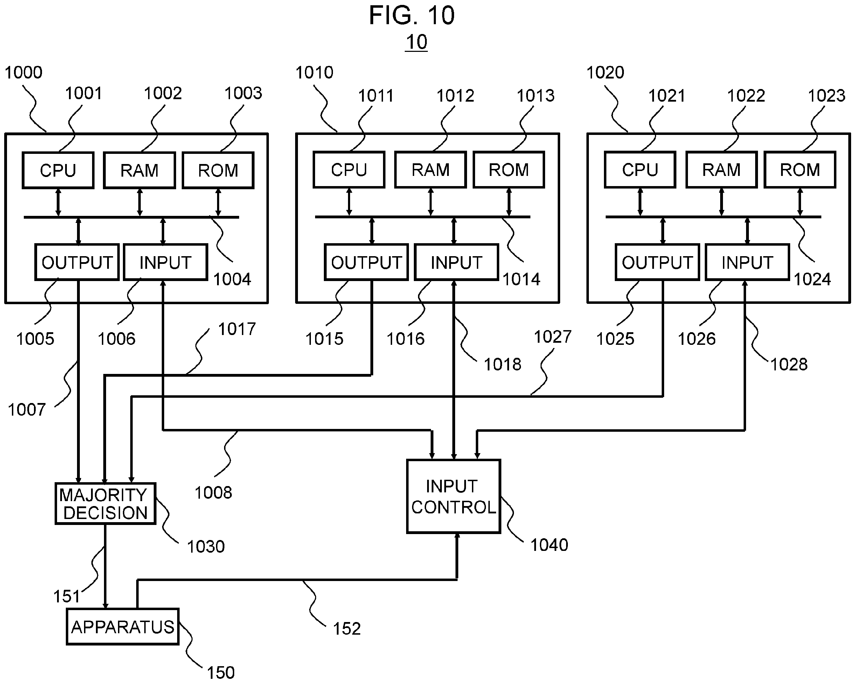

Hereinafter, first to fifth embodiments according to the present invention will be described in this order with reference to the drawings. The first embodiment is illustrated in FIGS. 1 to 3, the second embodiment is illustrated in FIGS. 1, 2, and 4, the third embodiment is illustrated in FIGS. 1, 5, and 6, the fourth embodiment is illustrated in FIGS. 1 and 7 to 9, and the fifth embodiment is illustrated in FIGS. 10 to 13.

### [First embodiment]

The first embodiment will be described with reference to FIGS. 1 to 3. FIG. 1 is a block diagram common to a control device according to the first to fourth embodiments of the present invention. Note that the description of FIG. 1 will be omitted in the second to fourth embodiments described later. As illustrated in FIG. 1, the control device 1 of the first embodiment includes a first processing device 100, a second processing device 110, an output stop circuit 120, a collation circuit 130, an input control circuit 140, an apparatus 150, and buses 108 and 118.

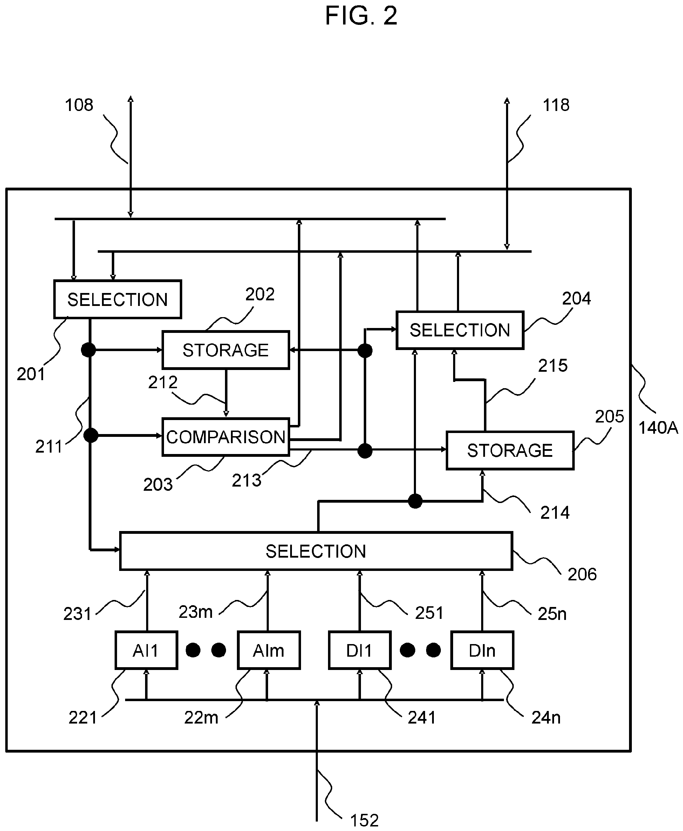

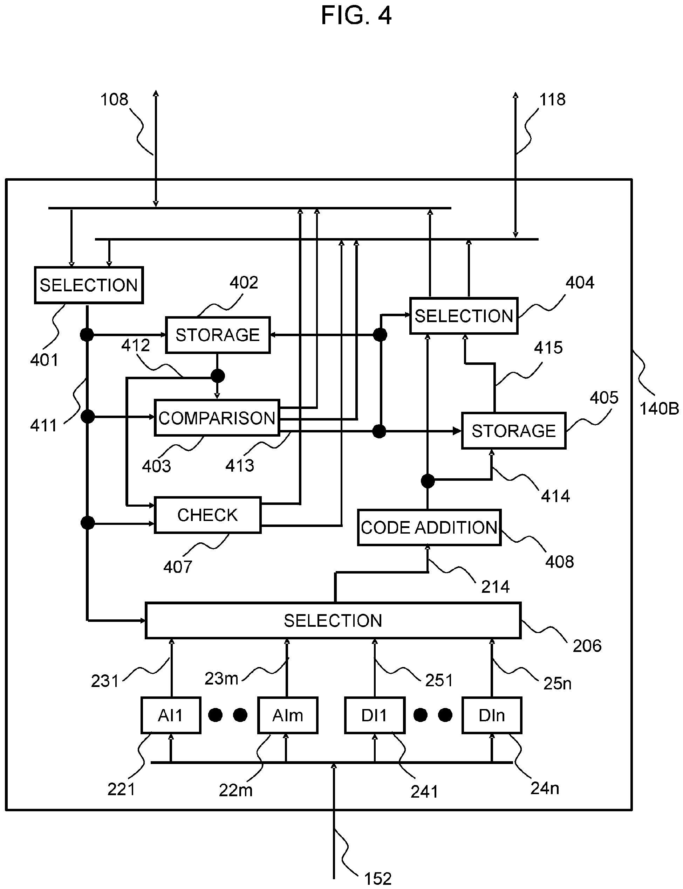

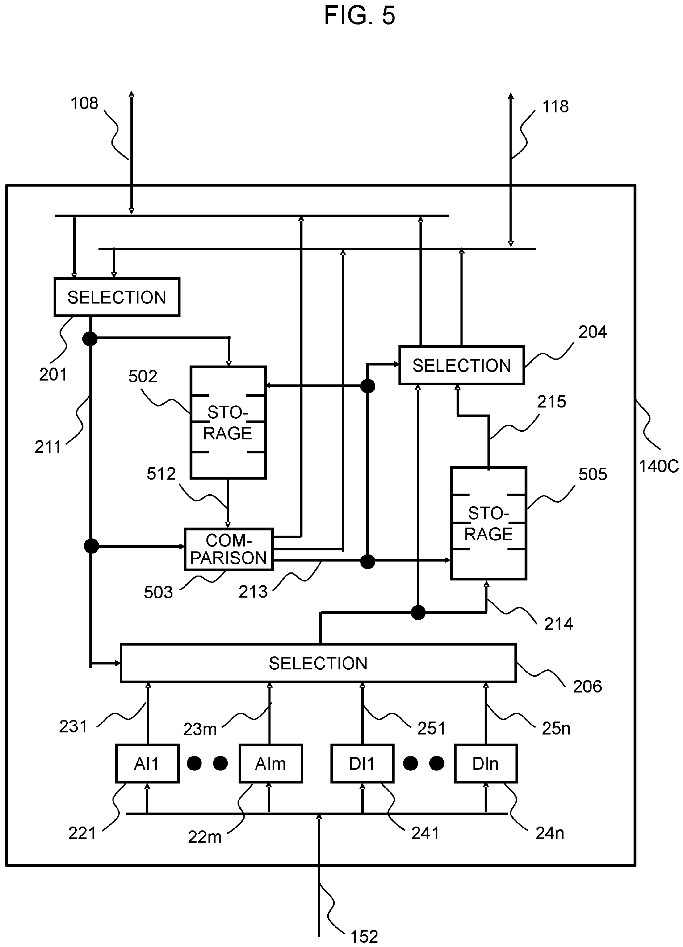

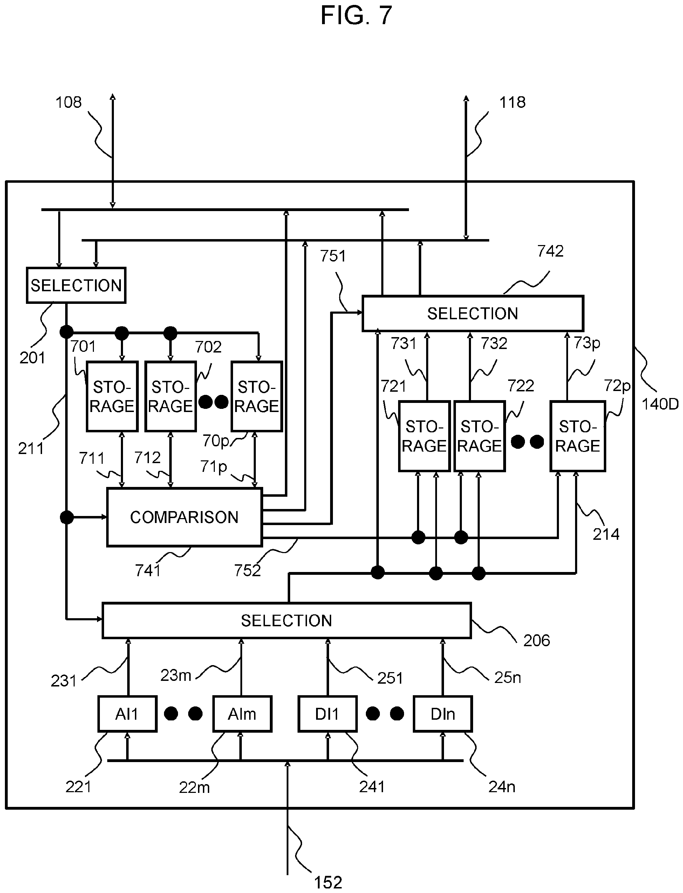

The input control circuit 140 has four variations, and an input control circuits 140A (FIG. 2), 140B (FIG. 4), 140C (FIG. 5), and 140D (FIG. 7) corresponding to the first to fourth embodiments in order will be described later mainly about only differences. However, in the first embodiment, most of the common parts of the input control circuits will be collectively described as the input control circuit 140. The first processing device 100 includes a CPU 101, a RAM 102, a ROM 103, an output circuit 105, an input circuit 106, and a bus 104. The second processing device 110 includes a CPU 111, a RAM 112, a ROM 113, an output circuit 115, an input circuit 116, and a bus 114.

The CPU 101 executes the following processing according to the program stored in the ROM 103. First, the CPU 101 inputs information regarding the apparatus 150 from the input circuit 106 via the bus 104, and performs predetermined control processing. Thereafter, information necessary for controlling the apparatus 150 is written by the CPU 101 into the output circuit 105 via the bus 104. The RAM 102 is used to store the progress of the control processing. The operation of the CPU 111 is the same as the operation of the CPU 101.

When the input circuit 106 receives an input request (also simply referred to as "request") from the CPU 101 via the bus 104, that input request is output to the input control circuit 140 via the bus 108. In addition, when the input circuit 106 receives the data responding to the input request from the input control circuit 140 via the bus 108, that data is output to the CPU 101 via the bus 104 by the input circuit 106. The operation of the input circuit 116 is the same as that of the input circuit 106.

When receiving information from the CPU 101 via the bus 104, the output circuit 105 changes an output value to a signal line 107 according to the received information. The value output to the signal line 107 may be information on whether a switch present in the apparatus 150 is turned on or off.

The value output to the signal line 107 may be a digital value for an analog-to-digital (AD) conversion circuit present in the apparatus 150. In addition, the value output to the signal line 107 may be a command value for changing the state of the switch, the AD conversion circuit, or the like present in the apparatus 150. The command value is preferably a combination of an enable signal, an address value, data, or the like. The operation of the output circuit 115 is also the same as that of the output circuit 105.

In an initial state, the collation circuit 130 sets, to 0 (output permission), a stop command to be output to the output stop circuit 120 via a signal line 131. In addition, the collation circuit 130 fetches the outputs of the output circuits 105 and 115 via the signal lines 107 and 117. As a result, when the values do not match, the collation circuit 130 sets, to 1 (output stop), the stop command to be output to the output stop circuit 120 via the signal line 131.

A timing at which the collation circuit 130 returns the stop command to 0 (output permission) may be when the signal line 107 matches the signal line 117. In addition, the timing for returning the stop command to 0 (output permission) may be when a signal indicating a system reset state not explicitly illustrated in FIG. 1 is asserted. In this case, even when the signal line 107 matches the signal line 117, the stop command remains at 1 (output stop) until the system reset state is reached.

When the stop command received from the collation circuit 130 via the signal line 131 is 0 (output permission), the output stop circuit 120 outputs the value of the signal line 107 to the signal line 151. In addition, when the stop command received from the collation circuit 130 via the signal line 131 is 1 (output stop), the output stop circuit 120 outputs a predetermined value to the signal line 151. At this time, the value output to the signal line 151 is defined as a value for safely stopping the apparatus 150.

The input control circuit 140 sequentially executes the following processing. First, the input control circuit 140 receives an input request from the input circuit 106 via the bus 108. Next, the input control circuit 140 selects either the information of the apparatus 150 fetched from a signal line 152 or the information of the apparatus 150 fetched from the signal line 152 in the past and stored therein. The input control circuit 140 outputs the selected information to the input circuit 106 via the bus 108.

The input control circuit 140 sequentially executes the following processing. First, the input control circuit 140 receives an input request from the input circuit 116 via the bus 118. Next, the input control circuit 140 selects either the information of the apparatus 150 fetched from a signal line 152 or the information of the apparatus 150 fetched from the signal line 152 in the past and stored therein. The input control circuit 140 outputs the selected information to the input circuit 116 via the bus 118. Note that variations of the input control circuit 140 will be described later in the second to fourth embodiments.

FIG. 2 is a block diagram illustrating a first example 140A of the input control circuit 140 in the control device 1 of FIG. 1, and illustrates the feature of the first embodiment. The input control circuit 140A of FIG. 2 includes a first selection circuit 201, a first storage circuit 202, a comparison circuit 203, a second selection circuit 204, a second storage circuit 205, a third selection circuit 206, analog input circuits 221 to 22m, and digital input circuits 241 to 24n.

The first selection circuit 201 receives an input request via the bus 108 or the bus 118, selects either one, and outputs the selected one to the signal line 211. When the input request of only one of the bus 108 and the bus 118 is asserted, the input request of the asserted side is selected.

In a selection method when the input requests of both the bus 108 and the bus 118 are asserted, the input request of the bus 108 may always be preferentially selected. In addition, as another example adopted in the selection method when the input requests of both the bus 108 and the bus 118 are asserted, the selection may be performed to switch to the bus reverse to the previously selected bus every time.

In the case of a state where request information (also simply referred to as a "request" or an "input request") is not stored in the first storage circuit 202, when an input request is output to the signal line 211, the first storage circuit 202 stores that request. In addition, in the case of a state where a request is stored in the first storage circuit 202, when an instruction to select the output 215 of the second storage circuit 205 is output to the signal line 213, the first storage circuit 202 erases the stored request. In addition, the first storage circuit 202 outputs the stored request information to the signal line 212.

The comparison circuit 203 sequentially executes the following processing. First, the comparison circuit 203 compares the input request output to the signal line 211 with the input request output to the signal line 212. Next, the comparison circuit 203 outputs, to signal line 213, information indicating which one of an output 214 of the third selection circuit 206 and an output 215 of the second storage circuit 205 is selected. In addition, the comparison circuit 203 outputs a data valid signal and an error signal to the bus 108 and the bus 118. Note that details of the operation of the comparison circuit 203 will be described later.

When an instruction to select the output 214 of the third selection circuit 206 is output to the signal line 213, the second storage circuit 205 fetches and stores the value of the signal line 214. In addition, the second storage circuit 205 outputs the stored value to the signal line 215.

The second selection circuit 204 selects any one of the value of the signal line 213 and the value of the signal line 214 according to the selection signal fetched from the signal line 215, and outputs the selected value to the bus 108 and the bus 118.

In accordance with the input request output to the signal line 211, the third selection circuit 206 selects any one of the values of signal lines 231 to 23m and 251 to 25n and outputs the selected value to the signal line 214. The analog input circuits 221 to 22m fetch an analog signal from the signal line 152, converts the analog signal into a digital signal, and outputs the digital signal to the signal lines 231 to 23m.

The digital input circuits 241 to 24n fetch a multibit digital signal from the signal line 152 and outputs the digital signal to the signal lines 251 to 25n. Each of the signal lines 251 to 25n is a signal line in which a plurality of bits such as 1 byte, 2 bytes, or 4 bytes is combined. In addition, a role of the digital input circuits 241 to 24n is to combine the values of a plurality of bits into one. In addition, the digital input circuits 241 to 24n may perform voltage conversion on the digital signal fetched from the signal line 152.

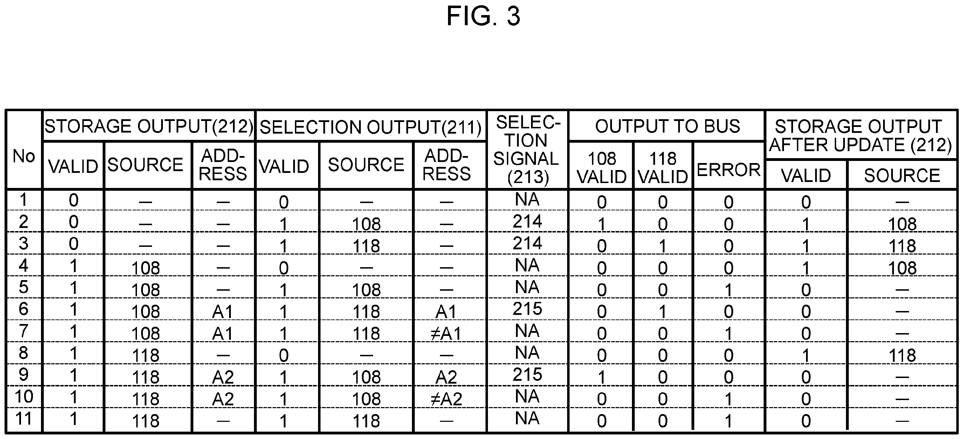

FIG. 3 is a table for explaining operations of the comparison circuit 203 and the storage circuit 202 in FIG. 2. The table of FIG. 3 displays a list of items largely classified into five columns arranged horizontally and operation states by different signals exemplified by being divided into rows of No. 1 to No. 11 arranged vertically. The items described on the right side of No in the leftmost column and arranged in five columns horizontally have a storage output (of the signal line 212), a selection output (of the signal line 211), a selection signal (of the signal line 213), an output to the bus, and a storage output after update (of the signal line 212). Note that a reference sign for specifying the signal line in FIG. 2 is clearly indicated in parentheses.

In FIG. 3, in the field of an error in the output to the bus, both the error signal output to the bus 108 and the error signal output to the bus 118 are collectively described in one field. This indicates that both are the same value. As another example, a method of outputting an error signal only to the bus indicated by the source of the selection output (211) is conceivable. However, since it may be preferable to stop the control device in a case where an error occurs, in the present embodiment, an example has been described in which the error signal is output to both to stop both the processing devices.

In FIG. 3, the field described as "-" indicates don't care (no action is required for control). In addition, the field described as "NA" indicates that the selection signal output to the signal line 213 is invalid. In this case, any value of the output of the second selection circuit 204 is regarded as invalid and is not used.

Example No. 1, Example No. 4, and Example No. 8 exemplify a case where the valid signal of the signal line 211 is 0. In this case, since there is no input request, the selection signal of the signal line 213 is invalid, the valid signal of the bus 108 is 0, the valid signal of the bus 118 is 0, and the error signal of the bus is 0. In addition, the value of the signal line 212 does not change.

Example No. 2 and Example No. 3 exemplify a case where the valid signal of the signal line 212 is 0 and the valid signal of the signal line 211 is 1. In this case, the selection signal of the signal line 213 is a value instructing the selection of the signal line 214, the valid signal of the bus corresponding to the source signal of the signal line 211 is 1, and the error signal of the bus is 0.

At the same time, the state of the signal line 211 is stored in the first storage circuit 202, and the signal line 212 changes to the same value as the signal line 211. In addition, although not illustrated in FIG. 3, the value of the signal line 214 is fetched into the second storage circuit 205.

Example No. 5, Example No. 6, and Example No. 7 exemplify a case where the valid signal of the signal line 212 is 1, the source signal is a value indicating the bus 108, and the valid signal of the signal line 211 is 1. Among these cases, a case where the source signal of the signal line 211 is a value indicating the bus 118, and the address is the same as that of the signal line 212 as in Example No. 6 is a correct operation.

In this case, the selection signal of the signal line 213 becomes a value instructing selection of the signal line 215, and the same data as that output to the bus 108 in Example No. 2 in the past is output to the bus 118. Accordingly, even when the times at which the input requests of both the first processing device 100 and the second processing device 110 are output are different from each other, it is guaranteed that both receive the same data.

The valid signal output to the signal line 212 changes to 0. This indicates that the input request stored in each of the first storage circuit 202 and the second storage circuit 205 and the input data are used and become invalid.

Note that a signal indicating validity or invalidity exists only in the first storage circuit 202 and does not exist in the second storage circuit 205. Whether the data of the second storage circuit 205 is valid can be known from the information of the first storage circuit 202.

On the other hand, Example No. 5 indicates a case where there is a request from the bus 118 before the bus 108. In this case, since a new request or data cannot be stored in the first storage circuit 202 and the second storage circuit 205, the request from the bus 108 cannot be processed, and the request is regarded as an error.

In the case of an error, normal processing cannot be continued, and thus the values stored in the first storage circuit 202 and the second storage circuit 205 are invalidated. In the first embodiment, the case of Example No. 5 is regarded as an error, but in this case, a method of causing the request from the bus 118 to wait until the input request is received from the bus 108 is also conceivable.

In order to realize such processing, it is sufficient if the following procedure is executed. First, a source signal is output from the first storage circuit 202 to the first selection circuit 201. Next, the first selection circuit 201 is prevented from selecting the request from the bus corresponding to the source signal received from the first storage circuit 202. The above-described processing can be realized by these procedures.

In the case of such a configuration, an input request from the bus 108 is not output to the signal line 211 during a period in which the source signal of the first storage circuit 202 is the value indicating the bus 108. As a result, the state of Example No. 5 does not occur, and no error is detected. In addition, since the valid signal to the bus 108 remains 0, as a result, the request from the bus 118 is kept waiting until the input request from the bus 108 arrives.

In a case where the address of the input request from the bus 118 is different from the address output to the signal line 212 as in Example No. 7, the case is regarded as an error. This is because the operations of the first processing device 100 and the second processing device 110 are different from each other. In addition, three rows of Example No. 9, Example No. 10, and Example No. 11 have a similarity relationship with three rows of Example No. 6, Example No. 7, and Example No. 5 in the order of these, and the operations are performed similarly. Note that a difference between both is only that the source signal of the signal line 212 is different.

As an effect, even when the plurality of processing devices is not completely synchronized so that the transmission timings of the same input request are different, and as a result, the input data transmitted from the control target apparatus is different with respect to the plurality of same input requests, the same input data can be input to the plurality of processing devices. Therefore, the same output data is obtained from the plurality of processing devices that has transmitted the same input request. Therefore, even when different input data is received from the control target apparatus in response to the same input request, the same output data can be obtained from the plurality of processing devices.

### [Second embodiment]

The second embodiment will be described mainly with reference to FIGS. 2 and 4. FIG. 4 is a block diagram illustrating the second example 140B of the input control circuit 140 in the control device 1 of FIG. 1, and illustrates the feature of the second embodiment.

The input control circuit 140B of FIG. 4 includes a first selection circuit 401, a first storage circuit 402, a comparison circuit 403, an error check (error detection) circuit 407, a check code (error detection code) addition circuit 408, a second selection circuit 404, a second storage circuit 405, a third selection circuit 206, analog input circuits 221 to 22m, and digital input circuits 241 to 24n. Note that the operation of the components denoted by the same reference signs as those in FIG. 2 is the same as those in FIG. 2.

The feature of the second embodiment is that an error check can be performed by adding a check code (error detection code) to an input request or input data. Accordingly, in a case where an error occurs in a bus, a signal line, a storage circuit, or the like, it is possible to prevent the continuation of processing with an erroneous request or data and to facilitate the cause analysis of a malfunction. In the second embodiment, error correction is not performed, but an error correction circuit may be used in a case where it is desired to reduce the probability of malfunction.

A check code is added to the input requests on the bus 108 and the bus 118. Therefore, the first selection circuit 401 selects the input request including the check code and outputs the input request to the signal line 411. The first storage circuit 402 stores the input request including the check code and outputs the input request to the signal line 412. The operation of the comparison circuit 403 is similar to that of the comparison circuit 203 of FIG. 2. The comparison circuit 403 ignores the check code received from the signal line 411 and the signal line 412.

The error check circuit 407 receives the input request and the check code from the signal line 411 and the signal line 412, and performs an error check. In a case where an error is detected, an error signal is output to the bus 108 and the bus 118. As a result, the error check circuit 407 can detect an error occurring in any of the input request of the bus 108, the input request of the bus 118, the first selection circuit 401, the signal line 411, the first storage circuit 402, and the signal line 412.

The error signal output to the bus 108 and the bus 118 may include information for distinguishing between the error detected by the signal line 411 and the error detected by the signal line 412. In this case, the location where the error has occurred can be determined in more detail.

The check code addition circuit 408 fetches the value of the signal line 214, adds a check code, and outputs the value to the signal line 414. The second storage circuit 405 fetches the value of the signal line 414 together with the check code, and outputs the value together with the check code to the signal line 415.

The second selection circuit 404 selects the value of the signal line 414 or the signal line 415 together with the check code, and outputs the value together with the check code to the bus 108 and the bus 118. Accordingly, the first processing device 100 can detect an error occurring in the input data in any of the signal line 414, the second storage circuit 405, the signal line 415, the selection circuit 404, and the bus 108. Similarly, the second processing device 110 can also detect an error occurring in the input data in any of the signal line 414, the second storage circuit 405, the signal line 415, the selection circuit 404, and the bus 118.

### [Third embodiment]

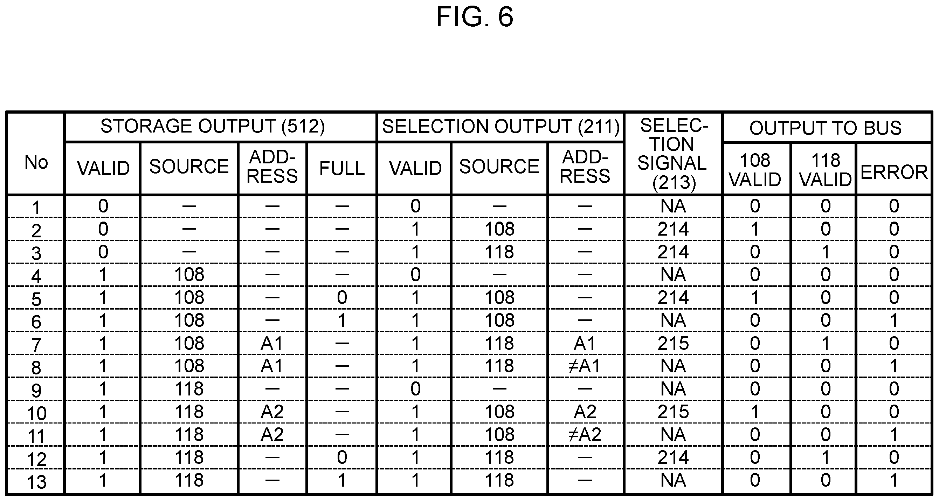

The third embodiment will be described mainly with reference to FIGS. 5 and 6. FIG. 5 is a block diagram illustrating the third example 140C of the input control circuit 140 in the control device 1 of FIG. 1, and illustrates the feature of the third embodiment. The input control circuit 140C of FIG. 5 includes the first selection circuit 201, a first storage circuit 502, a comparison circuit 503, the second selection circuit 204, a second storage circuit 505, the third selection circuit 206, the analog input circuits 221 to 22m, and the digital input circuits 241 to 24n. Note that the operation of the components denoted by the same reference signs as those in FIG. 2 is the same as those in FIG. 2.

The feature of the input control circuit 140C illustrated in FIG. 5 is that an area for storing a plurality of requests and data is provided in the first storage circuit 502 and the second storage circuit 505. Accordingly, even in a case where a different input request is received before the data input by one processing device is read by another processing device as in Example No. 5 or Example No. 11 in FIG. 3, the processing can be continued.

The first storage circuit 502 has an area for storing a plurality of input requests, and outputs the stored requests to the signal line 512 in a first-in first-out (FIFO) method. At the same time, a full signal indicating that all the storage areas are in use and a new request cannot be stored is output to the signal line 512. The operation of the comparison circuit 503 will be described later. The second storage circuit 505 has an area for storing a plurality of pieces of data, and outputs the stored data to the signal line 215 in the FIFO method.

FIG. 6 is a table for explaining the operation of the comparison circuit 503 of FIG. 5. Compared with FIG. 3, the full signal of the signal line 512 is added in FIG. 6, and the number of cases increases accordingly. Example No. 5 and Example No. 6 in FIG. 6 correspond to Example No. 5 in FIG. 3.

The case of Example No. 5 in FIG. 3 is always regarded as an error. On the other hand, in FIG. 6, when the full signal of the signal line 512 is 0 as in Example No. 5, since there are areas for storing a request and data in the first storage circuit 502 and the second storage circuit 505, it is possible to output input data to the bus 108 and continue the processing.

Although not explicitly illustrated in FIG. 6, corresponding requests and data are stored in the first storage circuit 502 and the second storage circuit 505, and the number of unused storage areas is reduced by one for each. On the other hand, when the full signal of the signal line 512 is 1 as in Example No. 6, since there is no area for storing a request and the data in the first storage circuit 502 and the second storage circuit 505, an error is detected.

Although not explicitly illustrated in FIG. 6, when an error occurs, normal processing cannot be continued. In this case, all the requests and data stored in the first storage circuit 502 and the second storage circuit 505 are invalidated. Similarly, Example No. 12 and Example No. 13 in FIG. 6 correspond to Example No. 11 in FIG. 3, and the same operations as those of Example No. 5 and Example No. 6 in FIG. 6 described above are performed.

In FIG. 6, except for the above, the operation is substantially the same as that in FIG. 3. That is, Examples No. 1 to No. 4 in FIG. 6 are substantially similar to Examples No. 1 to 4 in FIG. 3 except for the above. In addition, Examples No. 6 to No. 12 in FIG. 6 are substantially similar to Examples No. 5 to No. 11 in FIG. 3 except for the above.

### [Fourth embodiment]

The fourth embodiment will be described mainly with reference to FIGS. 7 to 9. FIG. 7 is a block diagram illustrating the fourth example 140D of the input control circuit 140 in the control device 1 of FIG. 1, and illustrates the feature of the fourth embodiment. The input control circuit 140D of FIG. 7 includes the first selection circuit 201, first storage circuits 701 to 70p, a comparison circuit 741, a second selection circuit 742, second storage circuits 721 to 72p, the third selection circuit 206, the analog input circuits 221 to 22m, and the digital input circuits 241 to 24n. Note that the operation of the components denoted by the same reference signs as those in FIG. 2 is the same as those in FIG. 2.

The feature of the input control circuit 140D in FIG. 7 is that the first storage circuits 701 to 70p and the second storage circuits 721 to 72p are configured by areas for storing a plurality of requests and data. The input control circuit 140D is in common with the input control circuit 140C in FIG. 5 in that the input control circuit 140D has a plurality of areas. Regarding a difference between both, the input control circuit 140C according to the third embodiment illustrated in FIG. 5 outputs requests and data in the FIFO method. On the other hand, the input control circuit 140D according to the fourth embodiment illustrated in FIG. 7 corresponds to a non-FIFO method, and a request that matches the request output to the signal line 211 is selected from among the plurality of requests and data.

Accordingly, as will be described later, even when the order of requests of the bus 108 and the order of requests of the bus 118 are different from each other, the processing can be continued. In a case where the processing contents of the first processing device 100 and the second processing device 110 have a multi-task configuration, the processing order of the first processing device 100 and the processing order of the second processing device 110 may be different due to a difference in task switching timing. An object of the input control circuit 140D of FIG. 7 is to make it possible to cope with such a case.

In the input control circuit 140D of FIG. 7, when receiving a storage instruction via signal lines 711 to 71p, the first storage circuits 701 to 70p stores the input request of the signal line 211 and outputs the input request to the signal lines 711 to 71p. In addition, when receiving an invalidation instruction via the signal lines 711 to 71p, the first storage circuits 701 to 70p sets the valid signal output to the signal lines 711 to 71p to 0.

The operation of the comparison circuit 741 will be described later. When receiving a storage instruction via a signal line 752, the second storage circuits 721 to 72p stores the value of the signal line 214 and outputs the value to signal lines 731 to 73p.

The second selection circuit 742 selects any one value of the signal lines 214 and 731 to 73p according to the selection signal received via the signal line 751 and outputs the selected value to the bus 108 and the bus 118.

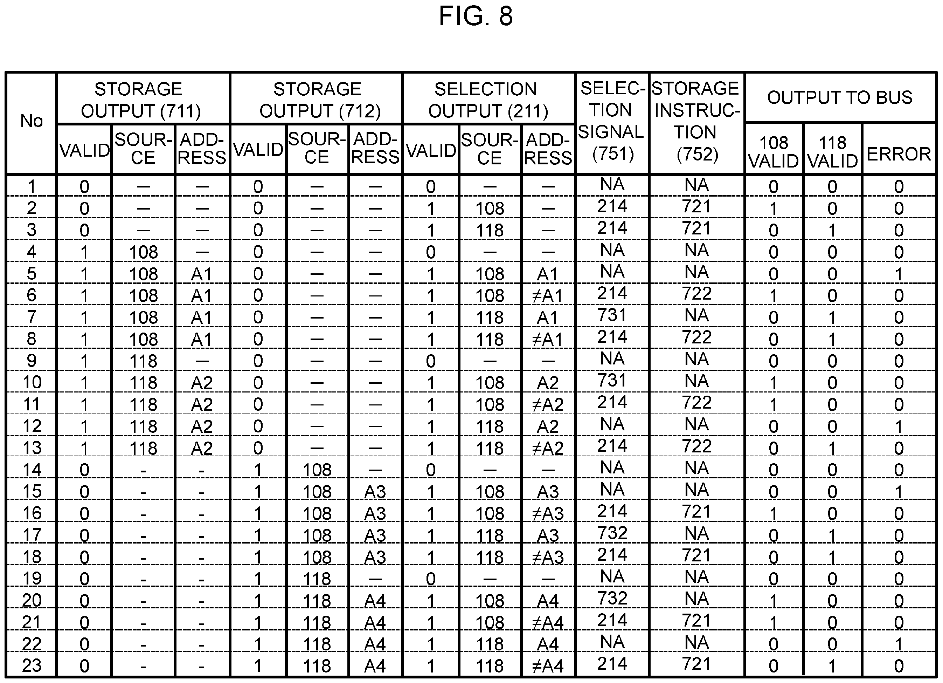

FIG. 8 is a table for explaining an operation according to a first example of the comparison circuit 741 of FIG. 7. In FIG. 8, a case where there are two storage areas in the first storage circuits 701 to 70p and the second storage circuits 721 to 72p (p = 2) has been exemplified. A difference from FIG. 3 is that there are two outputs of the first storage circuit (signal lines 711 and 712) and that the storage instruction of the signal line 752 is added.

Note that the signal line 752 is a storage instruction to the second storage circuits 721 and 722, but a similar storage instruction is also output on the signal lines 711 and 712. In addition, although not explicitly illustrated in FIG. 8, when the selection signal on the signal line 751 indicates the signal line 731 or the signal line 732, the corresponding first storage circuit (701 in the case of 731 and 702 in the case of 732) is invalidated.

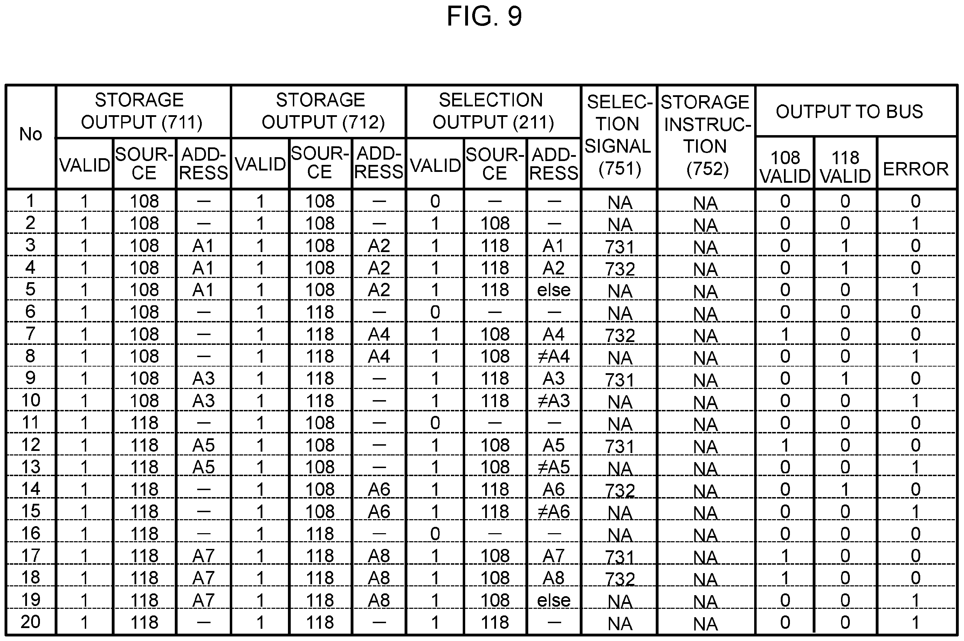

FIG. 8 covers a case where a maximum of one of the first storage circuits 701 and 702 illustrated in FIG. 7 is used. On the other hand, a case where both the two first storage circuits 701 and 702 are used will be described with reference to FIG. 9. Examples No. 1 to No. 3 in FIG. 8 are similar to Examples No. 1 to No. 3 in FIG. 3. In Example No. 2 and Example No. 3 of FIG. 8, since no two second storage circuits 721 and 722 are used, either of the storage instructions for the signal line 752 may be selected, but here, an example is described in which the second storage circuit 721 is selected.

Example No. 4, Example No. 9, Example No. 14, and Example No. 19 in FIG. 8 are in a state in which no input request is output to the signal line 211. In this state, the valid signal and the error signal to the bus are 0, and the write instruction of the signal line 752 is in an invalid state.

Example No. 5 of FIG. 8 is a case where the request from the bus 108 is stored in the first storage circuit 701, and the input request of the same address from the bus 108 is output to the signal line 711. In this case, although it is possible to store the request in the first storage circuit 702, in such a case, requests of the same address are stored in the first storage circuit 701 and the first storage circuit 702, it is not possible to determine which one is to be selected, and thus the case is regarded as an error.

As another example, a method of separately storing information indicating which one of the first storage circuit 701 and the first storage circuit 702 stores the request first and preferentially using the first storage circuit stored first is also conceivable. Example No. 6 is the same as Example No. 5 in FIG. 3, but since the first storage circuit 702 is empty in FIG. 8, the request can be stored in the first storage circuit 702, and the processing can be continued. Example No. 7 of FIG. 8 is the same as Example No. 6 of FIG. 3, and the output of the second storage circuit 721 is output to the bus 118.

Example No. 8 in FIG. 8 is the same as Example No. 7 in FIG. 3, but since the first storage circuit 712 is empty in FIG. 8, the request can be stored in the storage circuit 712, and the processing can be continued. When the order of the input requests is the same between the bus 108 and the bus 118, the case of the Example No. 8 in FIG. 8 should not occur. By the opposite interpretation, the occurrence of the case of Example No. 8 indicates that the order of the input requests is different between the bus 108 and the bus 118.

Even in such a case, the processing can be continued with the configuration of the input control circuit 140D in FIG. 7. In FIG. 8, Examples No. 10 to No. 13 differ from Examples No. 5 to No. 8 only in the source signal of the signal line 711, and are similar in operation.

In FIG. 8, the operations of Examples No. 15 to No. 18 are similar to those of Examples No. 5 to No. 8 except that the first storage circuit that stores the request is changed from 711 to 712. In addition, in FIG. 8, the operations of Examples No. 20 to No. 23 are similar to those of Examples No. 10 to 13 except that the first storage circuit that stores the request is changed from 711 to 712.

FIG. 9 is a table for explaining an operation according to a second example of the comparison circuit 741 of FIG. 7. In Example No. 1, Example No. 6, Example No. 11, and Example No. 16, there is no input request to the signal line 211, and the valid signal and the error signal to the bus are 0.

In FIG. 9, Example No. 3, Example No. 4, Example No. 7, Example No. 9, Example No. 12, Example No. 14, Example No. 17, and Example No. 18 indicate the following cases. That is, in a case where the input request of the signal line 211 is different from each source signal of the signal line 711 or 712, and the same address exists in either signal line 711 or 712, the corresponding input data is output to the bus 108 or the bus 118.

In FIG. 9, the other cases than those described above, that is, Example No. 2, Example No. 5, Examples No. 8 and 10, Example No. 13, Example No. 15, Example No. 19, and Example No. 20 are regarded as an error. In these cases, the request output to the signal line 211 is a request that is not stored in the first storage circuits 701 and 702, there is no location to newly store the request, and thus the request is regarded as an error.

### [Fifth embodiment]

The fifth embodiment will be described mainly with reference to FIGS. 10 to 13. FIG. 10 is a block diagram illustrating a configuration of a control device 10 according to the fifth embodiment of the present invention. The control device 10 of the fifth embodiment includes a first processing device 1000, a second processing device 1010, a third processing device 1020, a majority decision circuit 1030, an input control circuit 1040, and an apparatus 150.

The feature of the fifth embodiment in FIG. 10 is that the processing device is tripled to be the first processing device 1000 to the third processing device 1020. The first processing device 1000 to the third processing device 1020 and the operations of the internal components thereof are similar to that of the first processing device 100 of FIG. 1.

The majority decision circuit 1030 fetches the values of signal lines 1007, 1017, and 1027, and in a case where a correct value can be specified, outputs that value to the signal line 151. In a case where the correct value cannot be specified, a predetermined value is output to the signal line 151. At this time, the value output to the signal line 151 is defined as a value for safely stopping the apparatus 150.

The operation of the input control circuit 1040 is similar to that of the input control circuit 140 of FIG. 1 except that the number of buses 1008, 1018, and 1028 that output data in response to the received request is increased to three.

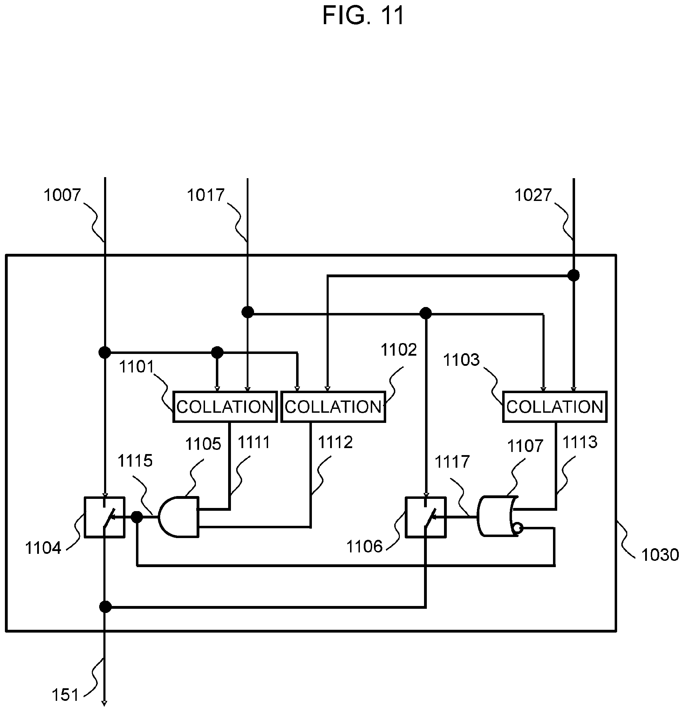

FIG. 11 is a block diagram illustrating an example of the majority decision circuit 1030 in the control device 10 of FIG. 10. The majority decision circuit 1030 includes a first collation circuit 1101, a second collation circuit 1102, a third collation circuit 1103, a first output stop circuit 1104, a second output stop circuit 1106, an AND circuit 1105, and an OR circuit 1107. The operations of the first collation circuit 1101 to the third collation circuit 1103 are similar to that of the collation circuit 130 in FIG. 1.

The operations of the first output stop circuit 1104 and the second output stop circuit 1106 are similar to that of the output stop circuit 120 in FIG. 1. However, since the two output stop circuits output values to the signal line 151, in a case where the output stop instruction is received to output a predetermined value, a driving force is set to be weak, and it is guaranteed that priority is given to the output of the output stop circuit that has not received the output stop instruction.

Specifically, in a case where the output stop circuit 1104 does not receive the output stop instruction, and the output stop circuit 1106 receives the output stop instruction, the driving force of the output stop circuit 1106 is weaker than that of the output stop circuit 1104, so that the output value of the output stop circuit 1104 is output to the signal line 151.

Conversely, in a case where the output stop circuit 1104 receives the output stop instruction, and the output stop circuit 1106 does not receive the output stop instruction, the driving force of the output stop circuit 1104 is weaker than that of the output stop circuit 1106, so that the output value of the output stop circuit 1106 is output to the signal line 151. On the other hand, in a case where neither the output stop circuit 1104 nor the output stop circuit 1106 receives the output stop instruction, both output the value with the same driving force, and thus, in a case where both output values are different, the value of the signal line 151 is not guaranteed.

However, as will be described later, the output stop instruction output to each of the signal line 1115 and the signal line 1117 is controlled by the OR circuit 1107 such that both do not become 0 (output permission) at the same time.

In a case where the output stop instructions of the signal line 1115 and the signal line 1112 are both 1 (output stop), the AND circuit 1105 outputs 1 (output stop) to the signal line 1111 and in other cases, outputs 0 (output permission). This means that in a case where the value of the bus 1007 matches that of the bus 1017 or the bus 1027, the value of the bus 1007 is output to the signal line 151.

In a case where the signal line 1113 is 1 (output stop), and the signal line 1117 is 0 (output permission), the OR circuit 1107 outputs 0 (output permission) to the signal line 1115 and in other cases, outputs 1 (output stop) to the signal line 1117. This means that in a case where the bus 1007 does not match the bus 1017, the bus 1007 does not match the bus 1027, and the bus 1017 matches the bus 1027, the value of the bus 1017 is output to the signal line 151.

In a case where the signal line 1115 is 0 (output permission), the OR circuit 1107 sets the signal line 1117 to 1 (output stop). As a result, it is guaranteed that both the signal lines 1115 and 1117 do not become 0 (output permission) at the same time.

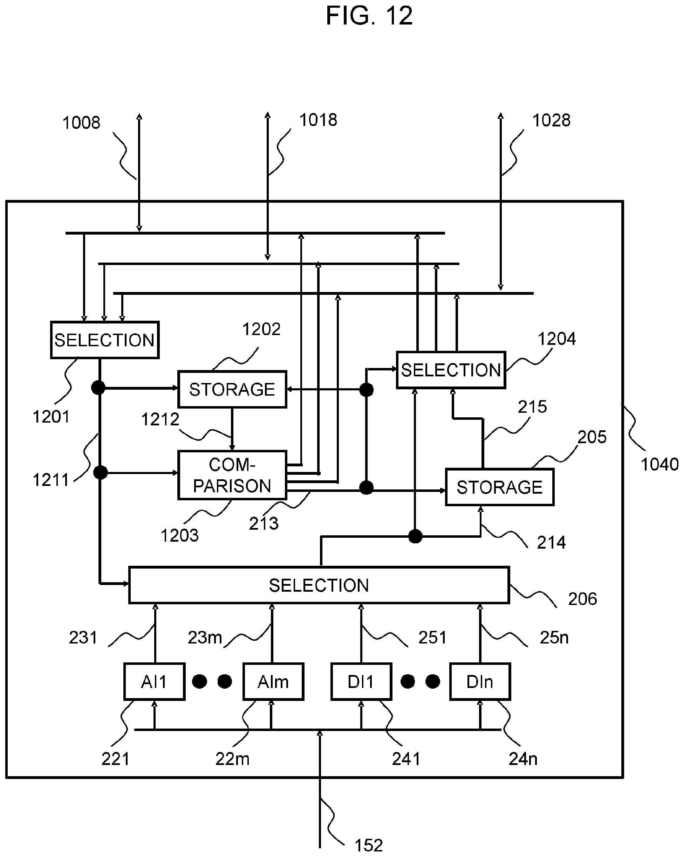

FIG. 12 is a block diagram illustrating an example of the input control circuit 1040 in the control device 10 of FIG. 10. The input control circuit 1040 of FIG. 12 includes a first selection circuit 1201, a first storage circuit 1202, a comparison circuit 1203, a second selection circuit 1204, the second storage circuit 205, the third selection circuit 206, the analog input circuits 221 to 22m, and the digital input circuits 241 to 24n. Note that in FIG. 12, the operation of the components denoted by the same reference signs as those in FIG. 2 is the same as those in FIG. 2.

A difference between the input control circuit 1040 of FIG. 12 and the input control circuit 140A of FIG. 2 is that the number of buses to be connected is different. The input control circuit 140A of FIG. 2 has two buses 108 and 118. On the other hand, the input control circuit 1040 of FIG. 12 is different in including three buses 1008, 1018, and 1028. Operations other than the operation related to this difference are similar.

The first selection circuit 1201 in FIG. 12 selects one from the input requests from the three buses 1008, 1018, and 1028 and outputs the selected one to the signal line 1211. The information output to the signal line 1211 is similar to that of the signal line 211 in FIG. 2 except that the source signal indicates one of the three buses.

The first storage circuit 1202 in FIG. 12 has the following feature in addition to the difference that the source signal is different from that of the first storage circuit 202 in FIG. 2. That is, the first storage circuit 1202 in FIG. 12 executes the input requests, which are different only in the source signal and have the same address, three times. Therefore, the first storage circuit 1202 outputs, to the signal line 1212, information regarding the bus for which the request has already been executed. Details will be described later.

The operation of the comparison circuit 1203 of FIG. 12 will be described later. The second selection circuit 1204 of FIG. 12 is the same as the second selection circuit 204 of FIG. 2 except that the number of buses for outputting data is increased from 2 to 3.

From such a viewpoint, the configuration of the input control circuit 1040 of the fifth embodiment illustrated in FIG. 12 exemplifies a configuration substantially similar to the configuration of the input control circuit 140A of the first embodiment illustrated in FIG. 2. From the same point of view, the configuration of the input control circuit 1040 of FIG. 12 may be similar to those of the input circuits 140B, 140C, and 140D respectively illustrated in FIGS. 4, 5, and 7, and it is sufficient if the number of buses to be connected is configured to increase from 2 to 3.

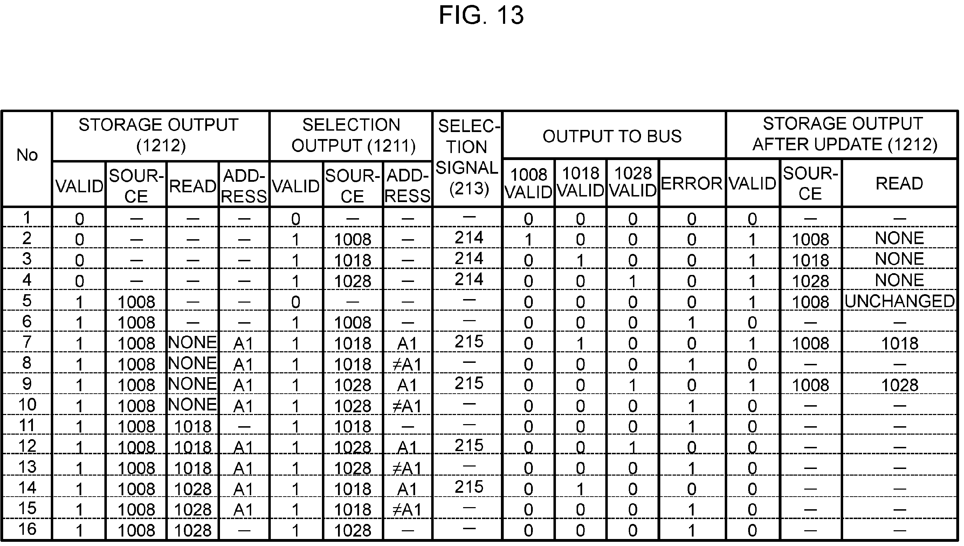

FIG. 13 is a table for explaining the operations of the comparison circuit 1203 and the storage circuit 1202 in FIG. 12. FIG. 13 has three differences from FIG. 3. The first difference is that the source signals of the signal lines 1211 and 1212 can identify three buses. The second difference is that a read signal is added to the signal line 1212. The third difference is that the number of buses to be output is three.

In the signal line 1212, the source signal indicates the bus where the request arrives first, and the read signal indicates the bus where the request arrives second. In the case of Example No. 7 and Example No. 9, in a case where the valid signal of the signal line 1212 is 1, and there is no read signal, when the second request arrives, the information of the bus that has output that request is reflected in the read signal. In addition, in a case where there is information in the read signal as in Example No. 11 and Example No. 16, a request from the same bus as that value is regarded as an error.

The table of FIG. 13 is similar to the operation described for the table of FIG. 3 except for the operation related to the differences with respect to the table of FIG. 3 described above. Note that although FIG. 13 does not illustrate a case where the source signal of the signal line 1212 is 1018 or 1028, the case is similar to a case where the source signal is 1008.

The control device 1, 10 and the control method according to the embodiment of the present invention can be summarized as follows.
[1] The control device 1, 10 is configured such that redundancy is imparted by multiplexing in which the plurality of processing devices 100 and 110, 1000, 1010, and 1020 is caused to execute the same processing, and the output of output data is stopped when there is a malfunction. The plurality of processing devices 100 and 110, 1000, 1010, and 1020 executes the same processing based on the input data input from the control target apparatus 150 and outputs output data. The control device 1, 10 determines a plurality of pieces of output data output by the same processing based on a predetermined determination criterion and stop outputting the output data when the determination result is a malfunction.

The control device 1, 10 includes a storage unit (second storage circuits 205, 405, 505, 721, 722 to 72p) and the input control circuit 140, 1040. The storage unit holds (referred to as "data latch" or "latch") data having different acquisition timings. That is, the storage unit latches first input data transmitted from the control target apparatus 150 in response to a first input request. The first input request is transmitted from any of the processing devices 100 and 110, 1000, 1010, and 1020 to the control target apparatus 150.

For each of the plurality of processing devices 100 and 110, 1000, 1010, and 1020, the input control circuit 140, 1040 controls whether or not to input the input data, which is transmitted from the control target apparatus 150 in response to an input request from a certain processing device to the control target apparatus 150, to the processing device.

The input control circuit 140, 1040 performs the following processing.
(1) The first input data is input to the processing device that has output the first input request among the processing devices 100 and 110, 1000, 1010, and 1020 that execute predetermined processing based on the first input data and output output data.
(2) It is determined whether or not a second input request transmitted from a processing device other than the processing device that has output the first input request among the plurality of processing devices is the same as the first input request.
(3) In a case where the determination result is true, the first input data stored in the storage unit (for example, the second storage circuit 205, 405, 505, 721, 722 to 72p) is input to the processing device that has output the second input request.
(4) In a case where the determination result is false, the second input data transmitted from the control target apparatus 150 in response to the second input request may be input to the processing device that has output the second input request.

The control device 1, 10 selects the output of the storage unit (second storage circuit 205, 405, 505, 721, 722 to 72p) with respect to the CPU (the processing device that has output the second input request) that has output the same request as that of the preceding CPU (the processing device that has output the first input request) . As a result, in a plurality of CPUs (processing devices 100 and 110, 1000, 1010, and 1020), even when the timings at which the input data is fetched are different, the second and subsequent CPUs receive the input data of the first CPU (the processing device that has output the first input request) stored in the storage unit, so that data matching is guaranteed.

Since the plurality of processing devices 100 and 110, 1000, 1010, and 1020 is not completely synchronized with each other, the transmission timings of the same input request are different, and as a result, even when the input data transmitted from the control target apparatus 150 to the plurality of same input requests are different, the input data in which the information difference caused by the acquisition timing difference is eliminated is acquired by the data latch. Therefore, the same input data can be input to the plurality of processing devices 100 and 110, 1000, 1010, and 1020.

Therefore, the same output data is obtained from the plurality of processing devices 100 and 110, 1000, 1010, and 1020 that has transmitted the same input request. Therefore, even when different input data is received from the control target apparatus in response to the same input request, the same output data can be obtained from the plurality of processing devices 100 and 110, 1000, 1010, and 1020. As a result, even in a case where the timings at which the input data is fetched are different, excessive malfunction detection can be prevented. Accordingly, in the control device 1, 10 which has redundancy by multiplexing in which the same processing is executed by a plurality of devices, it is possible to prevent excessive malfunction detection caused by a discrepancy in timing of fetching an input by the plurality of devices.

[2] In the control device 1, the determination criterion is preferably a criterion for the collation circuit 130 to determine a malfunction when there is a non-identical combination between the output data corresponding to the same input requests.

[3] As the fifth embodiment, the control device 10 is illustrated in FIGS. 10 to 13. In the control device 10, the determination criterion may be a criterion for determining, in a case where the output data has three or more systems, whether or not there is a malfunction based on a result of majority decision on the output data. Such a control device 10 includes the buses 1008, 1018, and 1028 of three or more systems, the processing devices 1000, 1010, and 1020 of three or more systems, and the majority decision circuit 1030. The buses 1008, 1018, and 1028 of three or more systems output data in response to the received request. The processing devices 1000, 1010, and 1020 of three or more systems include the first processing device 1000, the second processing device 1010, and the third processing device 1020 which are connected to the buses 1008, 1018, and 1028, respectively.

The majority decision circuit 1030 inputs the output data 1007, 1017, and 1027 corresponding to the same input request respectively from the processing devices 1000, 1010, and 1020 of three or more systems and performs majority decision. Based on the result of the majority decision, the control device 10 determines whether or not there is a malfunction. Here, when a value for safely stopping the apparatus 150 to be controlled is defined, the apparatus 150 can be safely stopped in a case where which output is correct cannot be determined based on the defined value.

[4] In the control device 1, 10, the input control circuit 140, 1040 includes the first selection circuit 201, 401, 1201 that selects one of input requests from the plurality of processing devices 100 and 110, 1000, 1010, and 1020, the first storage circuit 202, 402, 502, 701, 702 to 70p, 1202 that stores input requests from the plurality of processing devices 100 and 110, 1000, 1010, and 1020, the second storage circuit 205, 405, 505, 721, 722 to 72p that stores input data, and the second selection circuit 204, 404, 742, 1204 that selects any one of input data and the outputs of the second storage circuit 205, 405, 505, 721, 722 to 72p.

The second selection circuit 204, 404, 742, 1204 selects the output of the second storage circuit 205, 405, 505, 721, 722 to 72p in a case where the input requests from the plurality of processing devices 100 and 110, 1000, 1010, and 1020 match the outputs of the first storage circuit 202, 402, 502, 701, 702 to 70p.

In the case of the third processing device or the N-th processing device thereafter, similarly, the output of the second storage circuit 205, 405, 505, 721, 722 to 72p is selected, and the first input data is input to the processing device that has output the second input request. The first input data is sequentially input to the processing device that has output the third to N-th input requests.

As a result, in a case where the input request is determined to be the same as the first storage circuit 202, 402, 502, 701, 702 to 70p, 1202, the second selection circuit 204, 404, 742, 1204 selects the output of the second storage circuit 205, 405, 505, 721, 722 to 72p that has stored the input data. In response to the input requests from the plurality of processing devices 100 and 110, 1000, 1010, and 1020, the first input data is sequentially input to the first to N-th processing devices, and output data is obtained from each processing device. In the input data according to the input requests at different timings, although the fetching timing has a discrepancy, input data in which the information difference caused by the acquisition timing difference is eliminated is obtained by the data latch. As a result, it is possible to prevent excessive malfunction detection.

[5] The input control circuit 140B illustrated in the second embodiment of FIG. 4 includes the error detection circuit 407 and the error detection code addition circuit 408. The error detection code addition circuit 408 adds an error detection code to the input data. Therefore, the information including the error detection code can be stored in the second storage circuit 405.

As described above, in the input control circuit 140B, the error detection code is added to the bus, the signal line, the storage circuit, and the like by the error detection code addition circuit 408, and an error can be detected by the error detection circuit 407. Accordingly, in a case where an error occurs in the bus, the signal line, the storage circuit, or the like, it is possible to prevent the continuation of processing with an erroneous input request or input data. Further, it is also possible to facilitate the cause analysis of a malfunction.

[6] The feature of the third embodiment is illustrated in the input control circuit 140C of FIG. 5. The first storage circuit 502 has an area for storing a plurality of input requests from the plurality of processing devices 100 and 110. The second storage circuit 505 also has an area for storing a plurality of pieces of input data.

In a plurality of pieces of input data having different acquisition timings, a storage capacity becomes insufficient when a discrepancy between the plurality of pieces of input data increases, and thus, the first and second storage circuits 502 and 505 are provided with areas for storing a plurality of input requests and a plurality of pieces of input data. An application range can be expanded by orderly inputting and outputting data to and from the plurality of storage areas by FIFO.

The feature of the fourth embodiment is illustrated in the input control circuit 140D of FIG. 7. The input control circuit 140D includes the first storage circuits 701 and 702 to 70p and the second storage circuits 721 and 722 to 72p. The areas for storing a plurality of input requests and a plurality of pieces of input data are provided in the form illustrated in the first, second storage circuits 701 and 702 to 70p, 721 and 722 to 72p.

Data can be input to and output from the plurality of storage areas in parallel instead of FIFO. In this case, data that cannot be compared and used due to an excessively large timing difference may also be stored and used when the difference is reduced to a comparable extent.

The control method according to the embodiment of the present invention can be summarized as follows.

[7] This control method is a method in which redundancy is provided by multiplexing in which a plurality of processing systems (for example, the processing devices 100 and 110, 1000, 1010, and 1202) is caused to execute the same processing, and the output of output data is stopped when there is a malfunction. The plurality of processing systems executes the same processing based on the input data input from the control target apparatus 150 and outputs output data.

In this control method, a plurality of pieces of output data output by the same processing of the plurality of respective processing systems is determined based on a predetermined determination criterion, and the output of the output data is stopped when the determination result is a malfunction. First, the first input data transmitted from the control target apparatus 150 in response to a first input request is latched. The first input request is transmitted from a first processing system (for example, the processing device 100, 1000) to the control target apparatus 150.

Subsequently, the second input request is transmitted to a second processing system (for example, the second processing device 110, 1010). Similarly, for each of the plurality of processing systems, whether or not to input the input data, which is transmitted from the control target apparatus 150 in response to an input request from a certain processing system to the control target apparatus 150, to the processing system is controlled. This control is executed in the following procedure.

(1) The first input data is input to the first processing system (for example, the processing device 100, 1000) that executes predetermined processing based on the first input data and outputs output data.
(2) It is determined whether or not the second input request transmitted from the second processing system (for example, the second processing device 110, 1010) among the plurality of processing systems (for example, the processing device 100 and 110, 1000 and 1010) is the same as the first input request.
(3) In a case where the determination result is false, the second input data transmitted from the control target apparatus 150 in response to the second input request is input to the second processing system.
(4) In a case where the determination result is true, the first input data stored in the storage unit (for example, the second storage circuits 205, 405, 505, 721, 722 to 72p) is input to the second processing system (second processing device 110, 1010).

According to this control method, the output of the storage unit is selected for the second processing system that has output the same request as the preceding first processing system. As a result, even when the timings at which the input data is fetched are different from each other, the plurality of processing systems receives the input data of the first (initial) processing system stored in the storage unit for the second (second) and subsequent processing systems, and thus, data matching is guaranteed. As a result, in the control method in which redundancy is provided by multiplexing in which the same processing is executed in a plurality of devices, it is possible to prevent excessive malfunction detection caused by a discrepancy in timing of fetching an input by a plurality of devices.

### [Note]

In general, when it is desired to output data to the outside by an output command of a microcomputer or the like, the data actually output from the microcomputer may be output only for a moment. In some cases, it is necessary to hold (data latch) output data of the microcomputer. The control device according to the embodiment of the present invention may be realized using a D flip-flop or a latch register IC for this latch. According to the control device, by using the data latch of a memory instead of waiting for a new output, there is also an effect that a time for waiting for the output is saved and a data transfer between a plurality of CPUs can be speeded up.

Note that the present invention is not limited to the above-described embodiments, and various modifications are included. In addition, the above-described embodiments have been described in detail for easy understanding of the present invention and are not necessarily limited to those having all the described configurations. In addition, a part of the configuration of a certain embodiment can be replaced with the configuration of another embodiment, and the configuration of another embodiment can be added to the configuration of a certain embodiment.

It is possible to add, delete, and replace other configurations for a part of the configuration of each embodiment. Each of the above-described configurations, functions, processing units, processing means, and the like may be realized by hardware by designing a part or all of them with, for example, an integrated circuit. In addition, each of the above-described configurations, functions, and the like may be realized by software by a processor interpreting and executing a program for realizing each function.

Information such as a program, a table, and a file for realizing each function may be stored in a memory, a recording device such as a hard disk and a solid state drive (SSD), or a recording medium such as an IC card, an SD card, and a DVD. The input control circuit 140 can be downsized and sped up by being realized by a field programmable gate array (FPGA), a custom LSI, a static random access memory (SRAM), or a flash memory.

Note that, in a case where processing is realized only by hardware without using software, the execution time of the software is omitted, so that the speed can be further increased. Control lines and information lines are described in consideration of necessity for the description, and all control lines and information lines in the product are not necessarily described. It may be considered that almost all the components are connected to each other in actual.

### Reference Signs List

1, 10 control device
100, 1000 first processing device
101, 111, 1001, 1011, 1021 CPU
102, 112 RAM
103, 113 ROM
105, 115 output circuit
106, 116 input circuit
107, 117, 131, 151, 152, 211, 212, 213, 214, 215, 231 to 23m, 251 to 25n, 411, 412, 414, 415, 512, 711, 712 to 71p, 731, 732 to 73 signal line
104, 108, 114, 118, 1008, 1007, 1017, 1018, 1027, 1028 bus
110, 1010 second processing device
120 output stop circuit
130 collation circuit
140, 140A to 140D, 1040 input control circuit
150 apparatus
201, 401, 1201 first selection circuit
202, 402, 502, 701, 702 to 70p, 1202 first storage circuit
205, 405, 505, 721, 722 to 72p second storage circuit
204, 404, 742, 1204 second selection circuit
203, 403, 503, 741, 1203 comparison circuit
206 third selection circuit
221 to 22m analog input circuit
241 to 24n digital input circuit
407 error check circuit
408 check code addition circuit
1020 third processing device
1030 majority decision circuit
1101 first collation circuit
1102 second collation circuit
1103 third collation circuit
1104 first output stop circuit
1105 AND circuit
1106 second output stop circuit
1107 OR circuit

## Claims

1. A control device that determines, based on a predetermined determination criterion, a plurality of pieces of output data output for same processing respectively from a plurality of processing devices that executes processing based on input data input from a control target apparatus and outputs output data, and stops outputting the output data when a result of the determination is a malfunction, the control device comprising:
a storage unit that latches first input data that is transmitted from the control target apparatus in response to a first input request transmitted from any processing device of the plurality of processing devices to the control target apparatus; and
an input control circuit that controls, for each of the plurality of processing devices, whether or not to input input data transmitted from the control target apparatus to the processing device in response to an input request from the processing device to the control target apparatus, wherein
the input control circuit
(1) inputs the first input data to a processing device that executes predetermined processing based on the first input data to output the output data and has output the first input request,
(2) determines whether or not a second input request, which is transmitted from a processing device different from the processing device that has output the first input request among the plurality of processing devices, is same as the first input request, and
(3) inputs, when a result of the determination is true, the first input data stored in the storage unit to the processing device that has output the second input request.

2. The control device according to claim 1, wherein in the determination criterion, whether there is a non-identical combination between the output data is a criterion for determining a malfunction.

3. The control device according to claim 1, wherein the determination criterion is a criterion for determining, in a case where the output data has three or more systems, whether there is a malfunction based on a result of majority decision on the output data.

4. The control device according to claim 2 or 3, wherein
the input control circuit includes
a first selection circuit that selects one of input requests from the plurality of processing devices,
a first storage circuit that stores input requests from the plurality of processing devices,
a second storage circuit that stores input data, and
a second selection circuit that selects any one of input data and an output of the second storage circuit, and
the second selection circuit selects the output of the second storage circuit in a case where the input requests from the plurality of processing devices match output of the first storage circuit.

5. The control device according to claim 4, wherein
the input control circuit includes an error detection circuit capable of detecting an error and an error detection code addition circuit,
the error detection code addition circuit adds an error detection code to the input data, and
information including the error detection code is able to be stored in the second storage circuit.

6. The control device according to claim 4, wherein
the first storage circuit has an area for storing a plurality of input requests from the plurality of processing devices, and
the second storage circuit has an area for storing a plurality of pieces of input data.

7. A control method in which a plurality of processing systems having redundancy by multiplexing executes same processing based on input data input from a control target apparatus and outputs output data, a plurality of pieces of output data output respectively from the plurality of processing systems are determined based on a predetermined determination criterion, and output of the output data is stopped when a result of the determination is a malfunction, the control method comprising:
latching, in a storage unit, first input data that is transmitted from the control target apparatus in response to a first input request transmitted from any of the plurality of processing systems to the control target apparatus; and
controlling, for each of the plurality of processing systems, whether or not to input, in response to an input request from a certain processing system to the control target apparatus, input data transmitted from the control target apparatus to the processing system, wherein
the method is performed as following procedure
(1) the first input data is input to a processing system that executes predetermined processing based on the first input data to output the output data and has output the first input request,
(2) it is determined whether or not a second input request, which is transmitted from a processing system different from the processing system that has output the first input request among the plurality of processing systems, is same as the first input request,
(3) in a case where a result of the determination is false, second input data transmitted from the control target apparatus is input to the processing system that has output the second input request in response to the second input request, and
(4) in a case where the result of the determination is true, the first input data stored in the storage unit is input to the processing system that has output the second input request.

8. The control method according to claim 7, wherein in the determination criterion, whether there is a non-identical combination between the output data is a criterion for determining a malfunction.

9. The control method according to claim 7, wherein the determination criterion is a criterion for determining, in a case where the output data has three or more systems, whether there is a malfunction based on a result of majority decision on the output data.
